# EUROPEAN PATENT SPECIFICATION

(11) **EP 4 449 968 B1**
(45) Date of publication and mention of the grant of the patent: **01.04.2026**
(21) Application number: 23843964.0
(22) Date of filing: 25.07.2023
(51) Int. Cl.: A47L 11/40

(54) **CONTROL METHOD AND DEVICE FOR CLEANING COMBINATION, CLEANING COMBINATION, AND MEDIUM**
STEUERUNGSVERFAHREN UND -VORRICHTUNG FÜR REINIGUNGSKOMBINATION, REINIGUNGSKOMBINATION UND MEDIUM
PROCÉDÉ ET DISPOSITIF DE COMMANDE POUR COMBINAISON DE NETTOYAGE, COMBINAISON DE NETTOYAGE ET SUPPORT

(30) Priority: 03.03.2023 CN 202310196073
(43) Date of publication of application: 23.10.2024
(73) Proprietor: WUXI LITTLE SWAN ELECTRIC CO., LTD., Wuxi, Jiangsu 214028 (CN)
(72) Inventor: YANG, Weiguo, Wuxi, Jiangsu 214028 (CN); ZHANG, Zhiwei, Wuxi, Jiangsu 214028 (CN); WANG, Yuqing, Wuxi, Jiangsu 214028 (CN)
(74) Representative: RGTH
(86) International application number: PCT/CN2023/109105
(87) International publication number: WO 2024/183224

(56) References cited:
- CN-A- 113 243 841
- CN-A- 113 576 347
- CN-A- 115 012 170
- CN-A- 115 012 170
- CN-A- 115 844 296
- CN-U- 208 481 267
- CN-U- 215 016 834
- CN-U- 215 016 834
- KR-B1- 102 370 649

## Description

### FIELD

The present invention relates to the field of home appliance technologies, and more particularly, to a control method and apparatus for a cleaning assembly, a cleaning assembly, and a medium.

### BACKGROUND

People purchase cleaning appliances that meet different cleaning requirements based on their cleaning demands. For example, washing machines, vacuum cleaners, and the like have been widely used in households. However, a space available for arranging the cleaning appliances in home is often limited. Therefore, two cleaning appliances having the same or different functions may be integrated into a limited space, forming a cleaning assembly. Various cleaning components of the cleaning assembly can share water and electricity, and thus the space can be saved.

CN 113 243 841 A relates to a base station for a surface cleaning apparatus, comprising: a cleaning liquid supply for storing a cleaning liquid supplied to the surface cleaning apparatus; a liquid supply line for conveying the cleaning liquid stored in the cleaning liquid supply portion to the surface cleaning apparatus; the base station water pump is arranged on the liquid supply pipeline and is used for pumping the cleaning liquid stored in the cleaning liquid supply part to the surface cleaning equipment; and a seating detection section for detecting whether the surface cleaning apparatus is parked in place at the base station, wherein, when the seating detection section detects that the surface cleaning apparatus has been parked in place at the base station, the base station water pump is started so that the base station supplies the cleaning liquid to the surface cleaning apparatus through the liquid supply line or pumps the cleaning liquid from the surface cleaning apparatus back to the cleaning liquid supply section of the base station through the liquid supply line. The disclosure also provides a surface cleaning system and a control method.

### SUMMARY

In view of this, the present invention provides a control method and apparatus for a cleaning assembly, a cleaning assembly, and a medium, which can improve operating efficiency of the cleaning assembly.

According to an aspect of the present invention, there is provided a control method for a cleaning assembly. The control method comprises: obtaining a water feeding request of at least one component of the cleaning assembly, in which the cleaning assembly comprises two components comprising a floor cleaning component and a clothes cleaning component; and determining that one of the two components of the cleaning assembly is in a water feeding state, and controlling water feeding to another one of the two components of the cleaning assembly based on a water feeding request of the other one of the two components. The floor cleaning component comprises a base station water tank, a movable portion water tank, and a base station washing tank. The determining that the clothes cleaning component is in the water feeding state, and controlling water feeding to the floor cleaning component based on a water feeding request of the floor cleaning component comprises: controlling the base station water tank of the floor cleaning component to feed water to the movable portion water tank; and/or controlling the base station water tank of the floor cleaning component to feed water to the base station washing tank.

In some embodiments of the present invention, the two components of the cleaning assembly being a first component and a second component, and each of the first component and the second component comprises a water inlet valve. The determining that the first component is in the water feeding state, and controlling water feeding to the second component based on a water feeding request of the second component comprises: determining that the first component is in the water feeding state, and based on the water feeding request of the second component, controlling the water inlet valve of the first component to open to feed water to the first component through a first passage of a three-way arrangement, and controlling the water inlet valve of the second component to open to feed water to the second component through a second passage of the three-way arrangement.

In some embodiments of the present invention, the controlling the water inlet valve of the first component to open comprises: controlling the water inlet valve of the first component to open, and adjusting an opening degree of the water inlet valve of the first component to control a flow rate of water fed to the first component; and the controlling the water inlet valve of the second component to open comprises: controlling the water inlet valve of the second component to open, and adjusting an opening degree of the water inlet valve of the second component to control a flow rate of water fed to the second component.

In some embodiments of the present invention, the controlling the base station water tank of the floor cleaning component to feed water to the movable portion water tank; and/or the controlling the base station water tank of the floor cleaning component to feed water to the base station washing tank further comprise: controlling water fed to the base station water tank of the floor cleaning component to reach a first threshold.

In some embodiments of the present invention, the floor cleaning component further comprises a movable portion water suction pump. The controlling the base station water tank of the floor cleaning component to feed water to the movable portion water tank comprises: controlling the movable portion water suction pump to open, and feeding water to the movable portion water tank by the movable portion water suction pump.

In some embodiments of the present invention, the floor cleaning component further comprises a base station water pump. The controlling the base station water tank of the floor cleaning component to feed water to the base station washing tank comprises: controlling the base station water pump to open, and feeding water to the base station washing tank by the base station water pump.

In some embodiments of the present invention, the control method further comprises, subsequent to the controlling water fed to the base station water tank of the floor cleaning component to reach the first threshold: stopping the water feeding to the floor cleaning component; obtaining a current water volume of the base station water tank of the floor cleaning component; and feeding water to the base station water tank in response to determining that the current water volume is smaller than a second threshold. The second threshold is smaller than or equal to the first threshold.

According to another aspect of the present invention, there is provided a control apparatus of a cleaning assembly. The control apparatus comprises: an obtaining module configured to obtain a water feeding request of at least one component of the cleaning assembly, in which the cleaning assembly comprises two components comprising a floor cleaning component and a clothes cleaning component; a control module configured to determine that one of the two components of the cleaning assembly is in a water feeding state, and control water feeding to another one of the two components of the cleaning assembly based on a water feeding request of the other one of the two components. The floor cleaning component comprises a base station water tank, a movable portion water tank, and a base station washing tank; and the control module is further configured to: determine that the clothes cleaning component is in the water feeding state; and based on a water feeding request of the floor cleaning component, control the base station water tank of the floor cleaning component to feed water to the movable portion water tank, and/or control the base station water tank of the floor cleaning component to feed water to the base station washing tank.

According to another aspect of the present invention, there is provided a cleaning assembly. The cleaning assembly comprises a memory, a processor, and a computer program stored on the memory and executable on the processor. The processor is configured to implement, when executing the computer program, the control method according to the above embodiments of the present invention.

According to another aspect of the present invention, there is provided a computer-readable storage medium. The computer-readable storage medium has computer-readable instructions stored thereon. The computer-readable instructions implement, when executed by a processor, the control method according to the above embodiments of the present invention.

The technical solution according to the embodiments of the present invention has the following advantages over the related art.

The control method for the cleaning assembly according to the embodiments of the present invention comprises: obtaining a water feeding request of at least one component of the cleaning assembly, in which the cleaning assembly comprises two components being a floor cleaning component and a clothes cleaning component; and determining that one of the two components of the cleaning assembly is in a water feeding state, and controlling water feeding to another one of the two components of the cleaning assembly based on a water feeding request of the other one of the two components. Further, the floor cleaning component comprises a base station water tank, a movable portion water tank, and a base station washing tank. The determining that the clothes cleaning component is in the water feeding state, and controlling water feeding to the floor cleaning component based on a water feeding request of the floor cleaning component comprises: controlling the base station water tank of the floor cleaning component to feed water to the movable portion water tank; and/or controlling the base station water tank of the floor cleaning component to feed water to the base station washing tank. Therefore, in the embodiments of the present invention, the floor cleaning component and the clothes cleaning component are integrated into the cleaning assembly. When one of the two components of the cleaning assembly is in the water feeding state and the water feeding to the other one of the two components of cleaning assembly is required, the two components of the cleaning assembly can be controlled to be fed with water simultaneously without affecting normal water feeding to either component. In addition, in the embodiments of the present invention, water feeding to the two components can be carried out simultaneously when the water feeding to each of the two components of the cleaning assembly is required. In this way, unlike methods in the related art, it is not necessary to control the water feeding to one component after the water feeding has been carried out on the other component. Therefore, with the control method for the cleaning assembly according to the embodiments of the present invention, when the water feeding to each of the two components of the cleaning assembly is required, an overall water feeding time can be can shortened, thereby improving operating efficiency of the cleaning assembly.

### BRIEF DESCRIPTION OF THE DRAWINGS

The drawings herein, which are incorporated into and form a part of the specification, illustrate embodiments consistent with the present invention and are used in conjunction with the specification to explain the principles of the present invention.

In order to clearly explain technical solutions of embodiments of the present invention or in the related art, drawings used in description of the embodiments or the related art will be briefly described below. Based on these drawings, other drawings can be obtained by those skilled in the art without creative effort.
FIG. 1 is a schematic flowchart of a control method for a cleaning assembly according to an embodiment of the present invention.
FIG. 2 is a front view of a cleaning assembly according to an embodiment of the present invention.
FIG. 3 is a schematic rear structural view of a cleaning assembly according to an embodiment of the present invention.
FIG. 4 is a schematic flowchart of a control method for a cleaning assembly according to an embodiment of the present invention.
FIG. 5 is a schematic structural diagram of a control apparatus of a cleaning assembly according to an embodiment of the present invention.
FIG. 6 is a schematic structural diagram of a cleaning assembly according to an embodiment of the present invention.
FIG. 7 is a schematic diagram of a computer-readable storage medium according to an embodiment of the present invention.

### DETAILED DESCRIPTION OF THE EMBODIMENTS

In order to more clearly understand the above-mentioned objects, features and advantages of the present invention, embodiments of the present invention will be further described below. It should be noted that the embodiments of the present invention and the features in the embodiments may be combined with each other without conflict.

Many specific details are set forth in the following description in order to facilitate a full understanding of the present application, but the present application may also be implemented in other ways different from those described herein. Obviously, the embodiments in the specification are only a part of the embodiments of the present invention and not all of the embodiments.

In the related art, in order to save space, two cleaning appliances having the same or different functions such as a water feeding function and a water drainage function may be arranged in an integrated manner. However, the two cleaning appliances in the integrated arrangement usually cannot be fed water, and it is necessary to wait for one cleaning appliance to finish water feeding before controlling water feeding to another cleaning appliance, resulting in a long time for the water feeding to the integrated cleaning appliance and low operating efficiency. For example, for a dual washing machine in an integrated arrangement, when water feeding to both washing machines is required, water cannot be fed to one washing machine until water has been fed to the other washing machine, leading to a relatively long water feeding time of the dual washing machine and relatively low operating efficiency.

In order to solve the above-mentioned problems, embodiments of the present invention provide a control method for a cleaning assembly. FIG. 1 is a schematic flowchart of a control method for a cleaning assembly according to an embodiment of the present invention. The control method for the cleaning assembly may be applied to a scenario in which the cleaning assembly needs to be controlled. This method according to the embodiments may be performed by a control apparatus of a cleaning assembly according to an embodiment of the present invention, and the control apparatus of the cleaning assembly may be implemented by means of software and/or hardware. As illustrated in FIG. 1, the method comprises actions at blocks S11 and S12.

At block S11, a water feeding request of at least one component of the cleaning assembly is obtained. The cleaning assembly comprises two components. The two components may comprise a floor cleaning component such as a mopping machine and a clothes cleaning component such as a washing machine.

The two components of the cleaning assembly may comprise a first component and a second component. Obtaining the water feeding request of at least one component of the cleaning assembly further comprises: obtaining a water feeding request of the first component, or obtaining a water feeding request of the second component, or obtaining a water feeding request of the first component and a water feeding request of the second component simultaneously.

In an exemplary embodiment of the present invention, the first component and the second component of the cleaning assembly are both appliances with cleaning requirements. The first component may be the floor cleaning component, and the second component may be an appliance with water feeding requirement such as a clothes cleaning component, a dishwasher, a washer-dryer unit, or the like. In addition, the first component may be an appliance with water feeding requirement such as a clothes cleaning component, a dishwasher, a washer-dryer unit, or the like, and the second component may be the floor cleaning component, and the present invention is not limited thereto. The water feeding request of the first component may be sent by the first component or by a terminal device communicatively connected to the first component, and a sender of the water feeding request of the first component is not limited to the embodiments of the present invention. The water feeding request of the second component may be sent by the second component or by a terminal device communicatively connected to the second component, and a sender of the water feeding request of the second component is not limited to the embodiments of the present invention.

In another exemplary embodiment of the present invention, FIG. 2 is a front view of a cleaning assembly according to an embodiment of the present invention, in which a clothes cleaning component 10 and a floor cleaning component 20 integrated in the cleaning assembly are illustrated. Since each of the two components of the cleaning assembly has a cleaning function, the two components of the cleaning assembly have water feeding requirement, and water may be fed to the two components of the cleaning assembly by one water circuit. The floor cleaning component 20 is arranged below the clothes cleaning component 10, and therefore a space below the clothes cleaning component 10 can provide a floor space for the floor cleaning component 20, avoiding additional space occupancy of the floor cleaning component 20. In another exemplary embodiment, the clothes cleaning component 10 and the floor cleaning component 20 may be arranged separately, which is not limited to the embodiments of the present invention.

At block S12, it is determined that one of the two components of the cleaning assembly is in a water feeding state, and water feeding to another one of the two components of the cleaning assembly is controlled based on a water feeding request of the other one of the two components. The floor cleaning component comprises a base station water tank, a movable portion water tank, and a base station washing tank. Determining that the clothes cleaning component is in the water feeding state, and controlling water feeding to the floor cleaning component based on a water feeding request of the floor cleaning component comprises: controlling the base station water tank of the floor cleaning component to feed water to the movable portion water tank; and/or controlling the base station water tank of the floor cleaning component to feed water to the base station washing tank.

In the related art, each of the first component and the second component of the cleaning assembly is for example a clothes cleaning component, and the clothes cleaning component has a large demand for water feeding. When the first component and the second component have a demand for simultaneous water feeding, a water pressure cannot meet requirements. In this case, water feeding to the first component is first controlled, and water feeding to the second component is then controlled. Thus, simultaneous water feeding to the first component and the second component cannot be achieved, affecting simultaneous use of the first component and the second component, which in turn reduces operating efficiency of the cleaning assembly.

One of the first component and the second component according to the embodiments of the present invention is the floor cleaning component, and another one is the clothes cleaning component. The water feeding to the clothes cleaning component is less affected due to a short water feeding time of the floor cleaning component. Moreover, the floor cleaning component is has a small required water volume, during simultaneous water feeding to the floor cleaning component and the clothes cleaning component, the floor cleaning component has small influence on the water feeding to the clothes cleaning component due to a small water feeding volume of the floor cleaning component. Therefore, in the embodiments of the present invention, water feeding to the first component as well as water feeding to the second component can be simultaneously controlled when the first component and the second component request the water feeding simultaneously. Thus, when each of the first component and the second component has a demand for the water feeding, an overall time for the water feeding can be shortened, thereby improving the operating efficiency of the cleaning assembly.

In another exemplary embodiment of the present invention, each of the first component and the second component of the cleaning assembly comprises a water inlet valve. Further, determining that the first component is in the water feeding state, and controlling water feeding to the second component based on a water feeding request of the second component comprises: determining that the first component is in the water feeding state, and based on the water feeding request of the second component, controlling the water inlet valve of the first component to open to feed water to the first component through a first passage of a three-way arrangement, and controlling the water inlet valve of the second component to open to feed water to the second component through a second passage of the above-mentioned three-way arrangement.

In an exemplary embodiment of the present invention, FIG. 3 is a schematic rear structural view of the cleaning assembly illustrated in FIG. 2 according to an embodiment of the present invention, in which a three-way arrangement for feeding water may be provided at the cleaning assembly. A faucet is connected to the three-way arrangement through an end of a second pipe 12. The three-way arrangement has a first water outlet connected to a water inlet of the floor cleaning component 20 by a first pipe 11, and a second water outlet connected to a water inlet of the clothes cleaning component 10.

As illustrated in FIG. 3, the water inlet valve of the floor cleaning component 20 may be provided at the first pipe 11 or at a connection between the first pipe 11 and the floor cleaning component 20. When water feeding to the floor cleaning component 20 is required, the water inlet valve of the floor cleaning component 20 is controlled to open, and water flowing through the faucet flows out through the first water outlet of the three-way arrangement and passes through the first pipe 11 to be fed to the floor cleaning component 20. The water inlet valve of the clothes cleaning component 10 may be provided at the second pipe 12 or at a connection between the second pipe 12 and the clothes cleaning component 10. When water feeding to the clothes cleaning component 10 is required, the water inlet valve of the clothes cleaning component 10 is controlled to open, and the water flowing through the faucet flows out through the second water outlet of the three-way arrangement and to be fed to the clothes cleaning component 10.

As a result, the first component and the second component having the cleaning function can share water from one water source, and thus it is not necessary for the floor cleaning component to be provided with a separate pipe connector to the water source. In this way, a user's modification of a water source pipeline is eliminated, and use cost is lowered.

In another exemplary embodiment of the present invention, controlling the water inlet valve of the first component to open may comprise: controlling the water inlet valve of the first component to open, and adjusting an opening degree of the water inlet valve of the first component to control a flow rate of water fed to the first component.

Controlling the water inlet valve of the second component to open may comprise: controlling the water inlet valve of the second component to open, and adjusting an opening degree of the water inlet valve of the second component to control a flow rate of water fed to the second component.

In an exemplary embodiment of the present invention, the water inlet valve of the first component and the water inlet valve of the second component may, for example, be a flow limit valve having a flow limit function. Exemplarily, when a flow speed of water flowing through the water inlet valve of the first component is greater than a first water flow speed, the water inlet valve of the first component is controlled to close, or the opening degree of the water inlet valve of the first component is reduced, thereby controlling a decrease in an opening degree of water feeding to the first component. When a flow speed of water flowing through the water inlet valve of the second component is greater than a second water flow speed, the water inlet valve of the second component is controlled to close, or the opening degree of the water inlet valve of the second component is reduced, thereby controlling a decrease in an opening degree of water feeding to the second component. As a result, a problem of splashing of the water flow due to an excessive flow speed of water flowing through the first component and the second component can be avoided.

In an exemplary embodiment of the present invention, the floor cleaning component may comprise a base station water tank, a movable portion water tank, and a base station washing tank. Further, determining that the clothes cleaning component is in the water feeding state, and controlling water feeding to the floor cleaning component based on a water feeding request of the floor cleaning component further comprises: controlling the base station water tank of the floor cleaning component to feed water to the movable portion water tank of the floor cleaning component; or controlling the base station water tank of the floor cleaning component to feed water to the base station washing tank of the floor cleaning component; or controlling the base station water tank of the floor cleaning component to feed water to the movable portion water tank and the base station washing tank of the floor cleaning component simultaneously.

In an exemplary embodiment of the present invention, the floor cleaning component may comprise a base station and a movable cleaning portion. The base station comprises a base station water tank and a base station washing tank, and the movable cleaning portion comprises a movable portion water tank. The movable cleaning portion may be a robotic sweeper. When water feeding to the floor cleaning component is required, after controlling the water feeding to the floor cleaning component, the base station water tank of the floor cleaning component may be controlled to feed water to the base station washing tank of the floor cleaning component. After feeding water to the base station washing tank, the base station washing tank can clean a cleaning member of the movable cleaning portion that has moved back to the base station. Exemplarily, when the movable cleaning portion moves back to the base station after cleaning some floor regions, if the cleaning member of the movable cleaning portion is dirty and is required to be cleaned, the base station water tank can then be controlled to feed water to the base station washing tank to wash the cleaning member.

In another exemplary embodiment of the present invention, the floor cleaning component and/or the clothes cleaning component further comprises a water flow adjustment device, such as a water flow adjustment valve. Due to a high water pressure of a municipal pipeline network, direct water feeding may cause water to splash. However, the water flow adjustment device is provided for reducing a pressure of the fed water to avoid splashing of water flowing into the floor cleaning component for example. In this case, the control method may comprise: obtaining a water feeding request of at least one component of the cleaning assembly, in which the cleaning assembly comprises two components comprising a floor cleaning component and a clothes cleaning component; and determining that one of the two components of the cleaning assembly is in a water feeding state, and controlling water feeding to a water feeding adjustment apparatus of another one of the two components of the cleaning assembly based on a water feeding request of the other one of the two components.

In some embodiments, the movable cleaning portion may comprise a movable cleaning water tank. When water feeding to the floor cleaning component is required, after controlling the water feeding to the floor cleaning component, the base station water tank may be controlled to feed water to the movable portion water tank of the floor cleaning component. Exemplarily, the movable cleaning portion is provided with a movable portion water tank to allow the movable cleaning portion to clean a floor region with water in the movable portion water tank. When a water volume of the movable portion water tank decreases, the movable cleaning portion moves back to the base station, and the movable portion water tank is replenished by the base station water tank through water feeding. Once the water replenishment of the movable portion water tank is completed, the movable cleaning portion may return to continue cleaning the floor region again.

In some embodiments, in order to improve the operating efficiency, after controlling the water feeding to the floor cleaning component, when water feeding to each of the base station washing tank and the movable portion water tank is required, the base station water tank of the floor cleaning component can be controlled to feed water to the movable portion water tank of the floor cleaning component while being controlled to feed water to the base station washing tank of the floor cleaning component. Therefore, the simultaneous water feeding to the base station washing tank and movable portion water tank can be realized. As a result, a water feeding time is saved.

In another exemplary embodiment of the present invention, controlling the base station water tank of the floor cleaning component to feed water to the movable portion water tank of the floor cleaning component, or controlling the base station water tank of the floor cleaning component to feed water to the base station washing tank of the floor cleaning component, or controlling the base station water tank of the floor cleaning component to feed water to the movable portion water tank and the base station washing tank of the floor cleaning component simultaneously may further comprise: controlling water fed to the base station water tank of the floor cleaning component to reach a first threshold.

In an exemplary embodiment of the present invention, in order to ensure that there is a sufficient water volume of the base station water tank to be fed to the base station washing tank and the movable cleaning portion, water fed to the base station water tank may be controlled to reach the first threshold before, during or after controlling the base station water tank to feed water to the base station washing tank and/or the movable portion water tank. For example, the base station water tank may be provided with a water level sensor, and when the water level sensor senses that the water volume of the base station water tank reaches the first threshold, the base station water tank is controlled to feed no water.

Exemplarily, the base station water tank has a capacity of A liters, and the base station water tank may be controlled to be full of water, for example, to be fed with water of A liters of. In another exemplary embodiment of the present invention, the base station water tank may be controlled to not be full of water. When the base station water tank has a capacity of A liters for example, the base station water tank is fed with water of B liters, where B is smaller than A. In this way, overflowing after feeding water can be avoided. It should be noted that an exemplary first threshold may be set based on actual use requirements of the floor cleaning component, which is not limited to the embodiments of the present invention.

In some embodiments, it is also possible to control the base station water tank to feed water to the base station washing tank while controlling the water feeding to the base station water tank. In this way, water is fed into the base station washing tank without waiting for finishing of the water feeding to the base station water tank. When water of a predetermined volume is stored in the base station water tank, the water in the base station water tank may be injected into the base station washing tank, thereby improving cleaning efficiency of the base station washing tank. Similarly, when water of a predetermined volume is stored in the base station water tank, the base station water tank may be controlled to feed water to the movable portion water tank, shortening a water feeding time to the movable portion water tank. In some embodiments of the present invention, a rate at which water is fed to the base station water tank may be set to be greater than a rate at which water is fed to the base station washing tank and/or the movable portion water tank from the base station water tank.

In another exemplary embodiment of the present invention, the floor cleaning component may further comprise a base station water pump. Further, controlling the base station water tank of the floor cleaning component to feed water to the base station washing tank specifically comprises: controlling the base station water pump to open, and feeding water to the base station washing tank by the base station water pump.

In an exemplary embodiment of the present invention, the base station water tank has a water outlet connected to the base station water pump. When the base station washing tank requires water supply from the base station water tank, the base station water pump is opened to allow a water feeding circuit between the base station water tank and the base station washing tank not to be blocked, and the base station water tank can feed water to the base station washing tank of the floor cleaning component. When the water volume of the base station washing tank reaches a predetermined water volume threshold, the base station water pump is closed to allow the water feeding circuit between the base station water tank and the base station washing tank to be blocked, and the base station water tank no longer feeds water to the base station washing tank.

In another exemplary embodiment of the present invention, the floor cleaning component may further comprise a movable portion water suction pump. Further, controlling the base station water tank of the floor cleaning component to feed water to the movable portion water tank specifically comprises: controlling the movable portion water suction pump to open, and feeding water to the movable portion water tank by the movable portion water suction pump.

In the related art, a solenoid valve is connected at the water outlet of the base station water tank. Further, the solenoid valve is connected to a diversion valve. The solenoid valve is configured to control blocking or unblocking of a water outflowing circuit of the base station water tank, and the diversion valve is configured to control the base station water tank to be in communication with one of a water feeding branch circuit of the base station water tank to the base station washing tank and a water feeding branch circuit of the base station water tank to the movable portion water tank. Exemplarily, when the base station water tank is required to feed water to the base station washing tank, the solenoid valve is opened and then the diversion valve is driven to rotate to allow a water inflowing branch circuit of the base station water tank to the base station washing tank to open, and water in the base station water tank thus flows to the base station washing tank by the water pump. When the base station water tank is required to feed water to the movable portion water tank, the solenoid valve is opened and then the diversion valve is driven to rotate to allow the water feeding branch circuit of the base station water tank to the movable portion water tank to open, and water in the base station water tank thus flows to the movable portion water tank by the water pump. As a result, since the solenoid valve and the diversion valve are both provided, simultaneous feeding water from the base station water tank to the base station washing tank and the movable portion water tank cannot be implemented, thereby limiting a water inflowing rate of the floor cleaning component.

In order to solve the above-mentioned problem, the movable cleaning portion is provided with a suction pump according to the embodiments of the present invention. When water feeding to the movable portion water tank is required from the base station water tank, the movable portion suction pump is controlled to open, and the water feeding to the movable portion water tank from the base station water tank is carried out by the mobile section suction pump. When the water feeding to the movable portion water tank is no longer required, the movable portion suction pump is controlled to close, and no water feeding to the movable portion water tank is carried out from the base station water tank.

As a result, by providing the base station water tank with the base station water pump and providing the movable cleaning portion with the movable portion suction pump, simultaneous water feeding to the base station washing tank and the movable portion water tank can be carried out from the base station water tank, and the base station washing tank and the movable cleaning portion do not interact with each other during the simultaneous water feeding, which can improve a water feeding rate of the floor cleaning component.

In some embodiments, the control method may further comprise, subsequent to controlling water fed to the base station water tank of the floor cleaning component to reach the first threshold: stopping the water feeding to the floor cleaning component; obtaining a current water volume of the base station water tank of the floor cleaning component; and feeding water to the base station water tank in response to determining that the current water volume is smaller than a second threshold. The second threshold is smaller than or equal to the first threshold.

In an exemplary embodiment of the present invention, after the water inlet valve of the floor cleaning component is closed, the current water volume of the base station water tank may be sensed in real time by using the water level sensor. If the current water volume is smaller than the second threshold, exemplarily, the current water volume is for example C liters, which is smaller than the second threshold that is D liters, which indicates that water feeding to the base station water tank is required, then the water inlet valve of the floor cleaning component may be controlled to open to feed water to the base station water tank. If the current water volume is E liters for example, which is greater than the second threshold that is D liters, which indicates that the water feeding to the base station water tank is not required at this time, then the water inlet valve of the floor cleaning component is not opened.

It should be noted that an exemplary second threshold may be set based on actual use requirements of the floor cleaning component, as long as the second threshold satisfies that the first threshold is greater than the second threshold, which is not limited to the embodiments of the present invention.

FIG. 4 is an exemplary flowchart of a control method for a cleaning assembly according to an embodiment of the present invention. As illustrated in FIG. 4, the control method for the cleaning assembly comprises actions at blocks S21 to S29.

At block S21, a water feeding request of at least one of the first component and the second component is obtained.

At block S22, it is determined that the first component is in the water feeding state, and in response to the water feeding request of the second component, the water inlet valve of the first component and the water inlet valve of the second component are controlled to open.

At block S23, the feeding water to the base station water tank of the floor cleaning component is controlled until a water volume of the base station water tank reaches a first threshold.

At block S24, the water inlet valve of the second component is controlled to close.

At block 525, a current water volume of the base station water tank of the floor cleaning component is obtained.

At block S26, it is determined whether the water volume of the base station water tank is smaller than the second threshold; in response to the water volume of the base station water tank being smaller than the second threshold, the action at block S27 is performed; and in response to the water volume of the base station water tank being greater than or equal to the second threshold, the action at block S24 is performed.

At block S27, water is fed to the base station water tank.

After performing the action at block S27, the action at block S22 continues to be performed.

After performing the action at block S23, the control method further comprises actions at blocks S28 and S29.

At block S28, water feeding to the base station washing tank of the floor cleaning component is controlled.

At block S29, water feeding to the movable portion water tank of the floor cleaning component is controlled.

It should be noted that when the movable cleaning portion returns to the base station after cleaning the floor region, the cleaning member of the movable cleaning portion is dirty and is required to be cleaned, and the water feeding to the movable portion water tank of the mobile part is not required, only the action at block S28 may be performed; when the water volume of the movable portion water tank decreases after the movable cleaning portion has cleaned the floor region, the water feeding to the movable portion water tank is required instead of cleaning the cleaning member. After the movable cleaning portion returns to the base station, only the action at block S29 may be performed. In addition, when the water feeding to each of the base station washing tank and the movable portion water tank is required, the actions at blocks S28 and S29 may be performed simultaneously, which is not limited to the embodiments of the present invention.

It should be noted that FIG. 4 schematically shows that the second component is the floor cleaning component, and the first component may also be the floor cleaning component, which can be controlled with reference to the above-mentioned embodiments, and description thereof in detail will be omitted herein.

According to the embodiments of the present invention, the floor cleaning component and the clothes cleaning component are integrated into the cleaning assembly. When one of the two components of the cleaning assembly is in the water feeding state and the water feeding to the other one of the two components of cleaning assembly is required, the impact on the water pressure is small due to the small water feeding volume of the floor cleaning component. Further, due to the short water inflowing time, in the present invention, the two components of the cleaning assembly can be controlled to be fed water simultaneously without affecting normal water feeding to either component. In addition, in the embodiments of the present invention, water feeding to the two components can be carried out simultaneously when the water feeding to each of the two components of the cleaning assembly is required. In this way, unlike methods in the related art, it is not necessary to control the water feeding to one component after the water feeding has been carried out on the other component. Therefore, with the control method for the cleaning assembly according to the embodiments of the present invention, when the water feeding to each of the two components of the cleaning assembly is required, an overall water feeding time can be can shortened, thereby improving operating efficiency of the cleaning assembly.

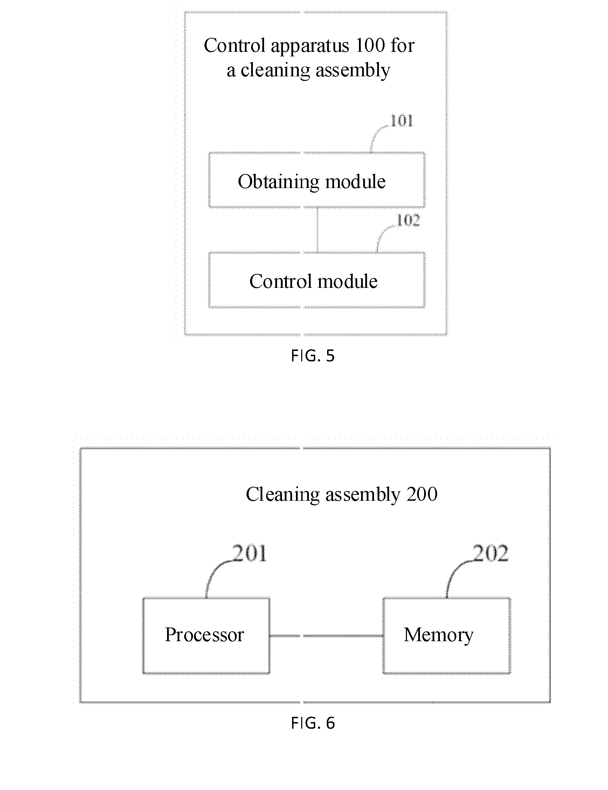

Embodiments of the present invention also provide a control apparatus of a cleaning assembly. FIG. 5 is a schematic diagram of a control apparatus of a cleaning assembly according to an embodiment of the present invention. As illustrated in FIG. 5, a control apparatus 100 for a cleaning assembly comprises an obtaining module 101 and a control module 102. The obtaining module 101 is configured to obtain a water feeding request of at least one component of the cleaning assembly. The cleaning assembly comprises two components comprising a floor cleaning component and a clothes cleaning component. The control module 102 is configured to determine that one of the two components of the cleaning assembly is in a water feeding state, and control water feeding to another one of the two components of the cleaning assembly based on a water feeding request of the other one of the two components.

In some embodiments, the two components of the cleaning assembly comprises a first component and a second component, respectively. Each of the first component and the second component comprises a water inlet valve. The control module 102 is further configured to: determine that the first component is in the water feeding state, and based on the water feeding request of the second component, control the water inlet valve of the first component to open to feed water to the first component through a first passage of a three-way arrangement and control the water inlet valve of the second component to open to feed water to the second component through a second passage of the three-way arrangement.

In some embodiments, the control module 102 is further configured to: control the water inlet valve of the first component to open, and adjust an opening degree of the water inlet valve of the first component to control a flow rate of water fed to the first component. Controlling the water inlet valve of the second component to open comprises: controlling the water inlet valve of the second component to open, and adjusting an opening degree of the water inlet valve of the second component to control a flow rate of the water fed to the second component.

In some embodiments, the floor cleaning component comprises a base station water tank, a movable portion water tank, and a base station washing tank. The control module 102 is further configured to: determine that the clothes cleaning component is in the water feeding state, and based on a water feeding request of the floor cleaning component, control the base station water tank of the floor cleaning component to feed water to the movable portion water tank, and/or control the base station water tank of the floor cleaning component to feed water to the base station washing tank.

In some embodiments, the control module 102 is further configured to control water fed to the base station water tank of the floor cleaning component to reach a first threshold.

In some embodiments, the floor cleaning component further comprises a movable portion water suction pump. The control module 102 is further configured to control the movable portion water suction pump to open, and feed water to the movable portion water tank by the movable portion water suction pump.

In some embodiments, the floor cleaning component further comprises a base station water pump. The control module 102 is further configured to control the base station water pump to open, and feed water to the base station washing tank by the base station water pump.

In some embodiments, the control module 102 is further configured to, subsequent to controlling water fed to the base station water tank of the floor cleaning component to reach the first threshold: stop the water feeding to the floor cleaning component; obtain a current water volume of the base station water tank of the floor cleaning component; and feed water to the base station water tank in response to determining that the current water volume is smaller than a second threshold. The second threshold is smaller than or equal to the first threshold.

The control apparatus according to the above-mentioned embodiments of the present invention and the control method according to the embodiments of the present invention have the same inventive concept and beneficial effects, and thus the description thereof in detail which will be omitted herein.

As illustrated in FIG. 6, embodiments of the present invention also provide a cleaning assembly 200. The cleaning assembly 200 comprises a memory 201, a processor 202, and a computer program stored on the memory and executable on the processor. The processor 202 is configured to implement, when executing the computer program, the control method for the cleaning assembly according to any of the above-mentioned embodiments.

In an exemplary embodiment of the present invention, the cleaning assembly may comprise a processor, a memory, a bus, and a communication interface. The processor, the communication interface, and the memory are connected to each other via the bus. The memory has stored thereon a computer program executable on the processor. The processor is configured to implement, when executing the computer program, the control method for the cleaning assembly according to any of the above-mentioned embodiments of the present invention.

The memory may comprise a high-speed random access memory (RAM: Random Access Memory) or may also comprise a non-volatile memory, such as at least one disk memory. A communication connection between this system network element and at least one other network element is realized through at least one communication interface (which may be wired or wireless), which may use the Internet, a wide area network, a local area network, a metropolitan area network, etc.

The bus may be an Industry Standard Architecture, ISA, bus, a Peripheral Component Interconnect, PCI, bus or an Extended Industry Standard Architecture, EISA, bus, etc. The bus may be divided into an address bus, a data bus, a control bus, etc. The memory is configured to store a program. The processor is configured to execute, when receiving execution instructions, the program. The control method for the cleaning assembly as disclosed in any of the above-mentioned embodiments of the present invention may be applied in or implemented by the processor.

The processor may be an integrated circuit chip having signal processing capabilities. In an implementation, actions of the above method may be accomplished by an integrated logic circuit in hardware in the processor or by instructions in the form of software. The above processor may be a general-purpose processor, comprising a Central Processing Unit (CPU), a Network Processor (NP), etc.; and may further be a Digital Signal Processor (DSP), an Application Specific Integrated Circuit (ASIC), a Field-Programmable Gate Array (FPGA) or other programmable logic devices, a discrete gate or a transistor logic device, and a discrete hardware component. The method, actions, and logic block diagrams according to any of the embodiments of the present invention may be implemented or performed. The general-purpose processor may be a microprocessor, or the processor may further be any conventional processor, etc. The actions of the method disclosed in combination with any of the embodiments of the present invention may be directly embodied as performed by a hardware decoding processor or performed by a combination of a hardware module and a software module in a decoding processor. The software module may be located in a random memory, a flash memory, a read-only memory, a programmable read-only memory or an electrically erasable programmable memory, a register, and other storage media mature in the art. The storage medium is located in the memory. The processor reads information in the memory and completes the actions of the above method in combination with the hardware.

The cleaning assembly according to the embodiments of the present invention and the control method for the cleaning assembly according to the embodiments of the present invention have the same inventive concept, which has the same beneficial effects as the method employed, executing, or implemented thereby.

Embodiments of the present invention also provide a computer-readable storage medium. Referring to FIG. 7, a computer-readable storage medium illustrated in FIG. 7 is an optical disk 30. The optical disk 30 has computer-readable instructions (i.e., a program product) stored thereon. The computer-readable instructions implements, when executed by a processor, the control method for the cleaning assembly according to any of the above-mentioned embodiments.

Examples of a storage medium for a computer comprise, but are not limited to, a Phase-Change Memory (PRAM), a Static RAM (SRAM), a Dynamic RAM (DRAM), other types of RAMs, a Read-Only Memory (ROM), an Electrically Erasable Programmable Read-Only Memory (EEPROM), a flash memory or other memory technologies, or other optical storage, or other magnetic storage devices, which will not be repeated herein.

The computer-readable storage medium according to the above-mentioned embodiments of the present invention and the control method for the cleaning assembly according to the embodiments of the present invention have the same inventive concept, which has the same beneficial effects as the method employed, run or realized by the application stored therein.

It should be noted that a large number of specific details are described in the specification provided herein. However, it can be understood that the embodiments of the present invention can be practiced without these specific details. In some examples, methods, structures, and techniques that are publicly known are not shown in detail for no vague understanding of the present specification.

Similarly, it should be understood that, in order to streamline the present invention and aid in understanding one or more of the various inventive aspects, in the description of exemplary embodiments of the present invention above, the various features of the present invention are sometimes grouped together in individual embodiments, figures, or descriptions thereof. However, the disclosed method should not be construed as reflecting an intent that the present invention claimed for protection requires more features than those expressly documented in each claim. More precisely, as reflected in the claims below, the inventive aspects lie in fewer than all of the features of the individual embodiments disclosed earlier. Accordingly, the claims that follow a specific embodiment are thereby expressly incorporated into that specific embodiment, with each claim itself serving as a separate embodiment of the present invention.

Those skilled in the art will understand that the modules in the apparatus of an embodiment can be adaptively changed and provided in one or more apparatuses different from that embodiment. The modules or units or components of the embodiments can be combined into a single module or unit or component, as well as can be divided into a plurality of sub-modules or sub-units or sub-assemblies. Any combination of all features disclosed in this specification (comprising accompanying claims, an abstract, and accompanying drawings) and all processes or units of any method or apparatus so disclosed may be employed, except that at least some of such features and/or processes or units are mutually exclusive. Unless otherwise expressly stated, each feature disclosed in this specification (comprising the accompanying claims, abstract, and accompanying drawings) may be replaced by an alternative feature that provides the same, equivalent, or similar purpose.

In addition, those skilled in the art can understand that although some embodiments described herein comprise some features comprised in other embodiments but not others, combinations of features from different embodiments are meant to be within the scope of the present invention and form different embodiments. For example, in the following claims, any one of the embodiments claimed for protection may be used in any combination.

Various component embodiments of the present invention may be implemented in hardware, or in software modules executing on one or more processors, or a combination thereof. Those skilled in the art should understand that a microprocessor or digital signal processor (DSP) may be used in practice to implement some or all of the functionality of some or all of the components of a creation device for a virtual machine according to embodiments of the present invention. The present invention may also be implemented as an apparatus or device program (e.g., a computer program and a computer program product) for performing some or all of the methods described herein. Such a program implementing the present invention may be stored on a computer-readable medium or may have the form of one or more signals. Such signals may be available for download from an Internet site, or provided on a carrier signal, or in any other form.

It should be noted that the above-mentioned embodiments are for illustrating the present invention rather than limiting the present invention, and those skilled in the art may devise replacement embodiments without departing from the scope of the appended claims. In the claims, any reference between parentheses should not be construed as a limitation of the claims. The word "comprising" does not exclude the existence of elements or steps not listed in the claims. The word "one" or "a" before an element does not exclude the existence of a plurality of such elements. The present invention may be implemented with the aid of hardware comprising a number of different elements and with the aid of a suitably programmed computer. In unit claims enumerating a number of devices, several of these devices may be specified by means of the same hardware item. The use of the words first, second, and third, etc. does not indicate any order. The words may be construed as names.

## Claims

1. A control method for a cleaning assembly (200), the control method comprising:
(S11) obtaining a water feeding request of at least a component of the cleaning assembly (200),
**characterized by**
the cleaning assembly (200) comprises two components being a floor cleaning component (20) and a clothes cleaning component (10); and the method further comprising:
(S12) determining that one of the two components of the cleaning assembly (200) is in a water feeding state, and controlling water feeding to another one of the two components of the cleaning assembly (200) based on a water feeding request of the another one of the two components,
wherein the floor cleaning component (20) comprises a base station water tank, a movable portion water tank, and a base station washing tank; and
determining that the clothes cleaning component (10) is in the water feeding state, and controlling water feeding to the floor cleaning component (20) based on a water feeding request of the floor cleaning component (20) comprises:
controlling the base station water tank of the floor cleaning component (20) to feed water to the movable portion water tank; and/or
controlling the base station water tank of the floor cleaning component (20) to feed water to the base station washing tank.

2. The control method according to claim 1, wherein:
the two components of the cleaning assembly (200) are a first component and a second component, each of the first component and the second component comprising a water inlet valve; and
determining that the first component is in the water feeding state, and controlling water feeding to the second component based on a water feeding request of the second component comprises:
(S22) determining that the first component is in the water feeding state, and based on the water feeding request of the second component, controlling the water inlet valve of the first component to open to feed water to the first component through a first passage of a three-way arrangement, and controlling the water inlet valve of the second component to open to feed water to the second component through a second passage of the three-way arrangement.

3. The control method according to claim 2, wherein:
said controlling the water inlet valve of the first component to open comprises:
controlling the water inlet valve of the first component to open, and adjusting an opening degree of the water inlet valve of the first component to control a flow rate of water fed to the first component; and
said controlling the water inlet valve of the second component to open comprises:
controlling the water inlet valve of the second component to open, and adjusting an opening degree of the water inlet valve of the second component to control a flow rate of water fed flow to the second component.

4. The control method according to claim 1, wherein said controlling the base station water tank of the floor cleaning component (20) to feed water to the movable portion water tank; and/or said controlling the base station water tank of the floor cleaning component (20) to feed water to the base station washing tank further comprise:
(S23) controlling water fed to the base station water tank of the floor cleaning component (20) to reach a first threshold.

5. The control method according to claim 1, wherein:
the floor cleaning component (20) further comprises a movable portion water suction pump; and
said controlling the base station water tank of the floor cleaning component (20) to feed water to the movable portion water tank comprises:
controlling the movable portion water suction pump to open, and (S29) feeding water to the movable portion water tank by the movable portion water suction pump.

6. The control method according to claim 1, wherein:
the floor cleaning component (20) further comprises a base station water pump; and
said controlling the base station water tank of the floor cleaning component (20) to feed water to the base station washing tank comprises:
controlling the base station water pump to open, and (S28) feeding water to the base station washing tank by the base station water pump.

7. The control method according to claim 4, further comprising, subsequent to said (S23) controlling water fed to the base station water tank of the floor cleaning component (20) to reach the first threshold:
stopping the water feeding to the floor cleaning component (20);
(S25) obtaining a current water volume of the base station water tank of the floor cleaning component (20); and
(S27) feeding water to the base station water tank in response to (S26) determining that the current water volume is smaller than a second threshold,
wherein the second threshold is smaller than or equal to the first threshold.

8. A control apparatus (100) of a cleaning assembly (200), the control apparatus (100) comprising:
an obtaining module (101) configured to obtain a water feeding request of at least a component of the cleaning assembly (200), **characterized by**
the cleaning assembly (200) comprises two components being a floor cleaning component (20) and a clothes cleaning component (10); and the control apparatus further comprising:
a control module (102) configured to determine that one of the two components of the cleaning assembly (200) is in a water feeding state, and controlling water feeding to another one of the two components of the cleaning assembly (200) based on a water feeding request of the another one of the two components, wherein:
the floor cleaning component (20) comprises a base station water tank, a movable portion water tank, and a base station washing tank; and
the control module (102) is further configured to:
determine that the clothes cleaning component (10) is in the water feeding state; and
based on a water feeding request of the floor cleaning component (20), control the base station water tank of the floor cleaning component (20) to feed water to the movable portion water tank, and/or control the base station water tank of the floor cleaning component (20) to feed water to the base station washing tank.

9. A cleaning assembly (200), comprising:
a memory (202),
a processor (201); and
a computer program stored on the memory (202) and executable on the processor (201),
**characterized in that** the processor (201) is configured to implement, when executing the computer program, a control method according to any one of claims 1 to 7.

10. A computer-readable storage medium, having a computer-readable instruction stored thereon,
**characterized in that** the computer-readable instruction implements, when executed by a processor (201), a control method according to any one of claims 1 to 7.

## Patentansprüche

1. Steuerungsverfahren für eine Reinigungsanordnung (200), wobei das Steuerungsverfahren Folgendes umfasst:
(S11) Erhalten einer Wasserzufuhranforderung von mindestens einer Komponente der Reinigungsanordnung (200),
**dadurch gekennzeichnet, dass**
die Reinigungsanordnung (200) zwei Komponenten umfasst, nämlich eine Bodenreinigungskomponente (20) und eine Kleiderreinigungskomponente (10); und das Verfahren ferner Folgendes umfasst:
(S12) Feststellen, dass sich eine der zwei Komponenten der Reinigungsanordnung (200) in einem Wasserzufuhrzustand befindet, und Steuern der Wasserzufuhr zu einer anderen der zwei Komponenten der Reinigungsanordnung (200) auf der Grundlage einer Wasserzufuhranforderung der anderen der zwei Komponenten,
wobei die Bodenreinigungskomponente (20) einen Wasserbehälter der Basisstation, einen Wasserbehälter eines beweglichen Bereichs und einen Waschbehälter der Basisstation umfasst; und
das Feststellen, dass sich die Kleiderreinigungskomponente (10) im Wasserzufuhrzustand befindet, und das Steuern der Wasserzufuhr zur Bodenreinigungskomponente (20) auf der Grundlage einer Wasserzufuhranforderung der Bodenreinigungskomponente (20) Folgendes umfasst:
Steuern des Wasserbehälters der Basisstation der Bodenreinigungskomponente (20), so dass er dem Wasserbehälter des beweglichen Bereichs Wasser zuführt; und/oder
Steuern des Wasserbehälters der Basisstation der Bodenreinigungskomponente (20), so dass er dem Waschtank der Basisstation Wasser zuführt.

2. Steuerungsverfahren gemäß Anspruch 1, wobei:
die zwei Komponenten der Reinigungsanordnung (200) eine erste Komponente und eine zweite Komponente sind, wobei sowohl die erste Komponente als auch die zweite Komponente ein Wassereinlassventil umfassen; und
das Feststellen, dass sich die erste Komponente im Wasserzufuhrzustand befindet, und das Steuern der Wasserzufuhr zur zweiten Komponente auf der Grundlage einer Wasserzufuhranforderung der zweiten Komponente Folgendes umfasst:
(S22) Feststellen, dass sich die erste Komponente im Wasserzufuhrzustand befindet, und auf der Grundlage der Wasserzufuhranforderung der zweiten Komponente, Steuern des Wassereinlassventils der ersten Komponente, so dass es sich öffnet, um der ersten Komponente Wasser durch einen ersten Durchgang einer Dreiwegeanordnung zuzuführen, und Steuern des Wassereinlassventils der zweiten Komponente, so dass es sich öffnet, um der zweiten Komponente Wasser durch einen zweiten Durchgang der Dreiwegeanordnung zuzuführen.

3. Steuerungsverfahren gemäß Anspruch 2, wobei:
das Steuern des Wassereinlassventils der ersten Komponente, so dass es sich öffnet, Folgendes umfasst:
Steuern des Wassereinlassventils der ersten Komponente, so dass es sich öffnet, und Einstellen eines Öffnungsgrades des Wassereinlassventils der ersten Komponente, um eine Durchflussrate des der ersten Komponente zugeführten Wassers zu steuern; und
das Steuern des Wassereinlassventils der zweiten Komponente, so dass es sich öffnet, Folgendes umfasst:
Steuern des Wassereinlassventils der zweiten Komponente, so dass es sich öffnet, und Einstellen eines Öffnungsgrades des Wassereinlassventils der zweiten Komponente, um eine Durchflussrate des der zweiten Komponente zugeführten Wassers zu steuern.

4. Steuerungsverfahren gemäß Anspruch 1, wobei das Steuern des Wasserbehälters der Basisstation der Bodenreinigungskomponente (20), so dass es dem Wasserbehälter des beweglichen Teils Wasser zuführt, und/oder das Steuern des Wasserbehälters der Basisstation der Bodenreinigungskomponente (20), so dass es dem Waschbehälter der Basisstation Wasser zuführt, ferner Folgendes umfasst:
(S23) Steuern des dem Wasserbehälter der Basisstation der Bodenreinigungskomponente (20) zugeführten Wassers, so dass es einen ersten Schwellenwert erreicht.

5. Steuerungsverfahren gemäß Anspruch 1, wobei:
die Bodenreinigungskomponente (20) ferner eine Wasseransaugpumpe für den beweglichen Bereich umfasst; und
das Steuern des Wasserbehälters der Basisstation der Bodenreinigungskomponente (20), so dass er Wasser in den Wasserbehälter des beweglichen Bereichs zuführt, Folgendes umfasst:
Steuern der Wasseransaugpumpe des beweglichen Bereichs, so dass sie sich öffnet, und (S29) Zuführen von Wasser zum Wassertank des beweglichen Bereichs durch die Wasseransaugpumpe des beweglichen Bereichs.

6. Steuerungsverfahren gemäß Anspruch 1, wobei:
die Bodenreinigungskomponente (20) ferner eine Wasserpumpe der Basisstation umfasst; und
das Steuern des Wasserbehälters der Basisstation der Bodenreinigungskomponente (20), so dass er Wasser in den Waschbehälter der Basisstation zuführt, Folgendes umfasst:
Steuern der Wasserpumpe der Basisstation, so dass sie sich öffnet und (S28) Zuführen von Wasser zum Waschtank der Basisstation durch die Wasserpumpe der Basisstation.

7. Steuerungsverfahren gemäß Anspruch 4, ferner umfassend, im Anschluss an (S23) das Steuern des dem Wasserbehälter der Basisstation der Bodenreinigungskomponente (20) zugeführten Wassers, so dass es den ersten Schwellenwert erreicht:
Stoppen der Wasserzufuhr zur Bodenreinigungskomponente (20);
(S25) Ermitteln einer aktuellen Wassermenge im Wassertank der Basisstation der Bodenreinigungskomponente (20); und
(S27) Zuführen von Wasser zum Wasserbehälter der Basisstation als Reaktion darauf, dass (S26) festgestellt wurde, dass das aktuelle Wasservolumen kleiner als ein zweiter Schwellenwert ist,
wobei der zweite Schwellenwert kleiner oder gleich dem ersten Schwellenwert ist.

8. Steuergerät (100) einer Reinigungsanordnung (200), wobei das Steuergerät (100) Folgendes umfasst:
ein Erfassungsmodul (101), das so konfiguriert ist, dass es eine Wasserzufuhranforderung von mindestens einer Komponente der Reinigungsanordnung (200) erfasst, **dadurch gekennzeichnet, dass**
die Reinigungsanordnung (200) zwei Komponenten umfasst, nämlich eine Bodenreinigungskomponente (20) und eine Kleiderreinigungskomponente (10); und das Steuergerät ferner Folgendes umfasst:
ein Steuermodul (102), das so konfiguriert ist, dass es feststellt, dass sich eine der zwei Komponenten der Reinigungsanordnung (200) in einem Wasserzufuhrzustand befindet, und die Wasserzufuhr zu einer anderen der beiden Komponenten der Reinigungsanordnung (200) auf der Grundlage einer Wasserzufuhranforderung der anderen der zwei Komponenten steuert, wobei
die Bodenreinigungskomponente (20) einen Wasserbehälter der Basisstation, einen Wasserbehälter des beweglichen Bereichs und einen Waschbehälter der Basisstation umfasst; und
das Steuermodul (102) ferner so konfiguriert ist, dass es
feststellt, dass sich die Kleiderreinigungskomponente (10) im Wasserzufuhrzustand befindet; und
auf der Grundlage einer Wasserzufuhranforderung der Bodenreinigungskomponente (20) den Wasserbehälter der Basisstation der Bodenreinigungskomponente (20) so steuert, dass er Wasser in den Wasserbehälter des beweglichen Bereichs zuführt, und/oder den Wasserbehälter der Basisstation der Bodenreinigungskomponente (20) so steuert, dass er Wasser in den Waschbehälter der Basisstation zuführt.

9. Reinigungsanordnung (200), umfassend:
einen Speicher (202),
einen Prozessor (201); und
ein auf dem Speicher (202) gespeichertes und auf dem Prozessor (201) ausführbares Computerprogramm,
**dadurch gekennzeichnet, dass** der Prozessor (201) so konfiguriert ist, dass er bei der Ausführung des Computerprogramms ein Steuerungsverfahren gemäß einem der Ansprüche 1 bis 7 implementiert.

10. Computerlesbares Speichermedium mit einer darauf gespeicherten computerlesbaren Anweisung,
**dadurch gekennzeichnet, dass** die computerlesbare Anweisung bei Ausführung durch einen Prozessor (201) ein Steuerungsverfahren gemäß einem der Ansprüche 1 bis 7 implementiert.

## Revendications

1. Procédé de commande pour un ensemble de nettoyage (200), le procédé de commande comprenant :
(S11) l'obtention d'une demande d'alimentation en eau d'au moins un composant de l'ensemble de nettoyage (200),
**caractérisé en ce que**
l'ensemble de nettoyage (200) comprend deux composants, à savoir un composant de nettoyage de sol (20) et un composant de nettoyage de vêtements (10) ; et le procédé comprenant en outre :
(S12) la détermination du fait que l'un des deux composants de l'ensemble de nettoyage (200) est dans un état d'alimentation en eau, et la commande de l'alimentation en eau vers l'autre des deux composants de l'ensemble de nettoyage (200) sur la base d'une demande d'alimentation en eau de l'autre des deux composants,
dans lequel le composant de nettoyage de sol (20) comprend un réservoir d'eau de station de base, un réservoir d'eau de partie mobile et un réservoir de lavage de station de base ; et
la détermination que le composant de nettoyage de vêtements (10) est dans l'état d'alimentation en eau, et la commande de l'alimentation en eau vers le composant de nettoyage de sol (20) sur la base d'une demande d'alimentation en eau du composant de nettoyage de sol (20) comprend :
la commande du réservoir d'eau de la station de base du composant de nettoyage de sol (20) pour alimenter en eau le réservoir d'eau de la partie mobile ; et/ou
la commande du réservoir d'eau de la station de base du composant de nettoyage de sol (20) pour alimenter en eau le réservoir de lavage de la station de base.

2. Procédé de commande selon la revendication 1, dans lequel :
les deux composants de l'ensemble de nettoyage (200) sont un premier composant et un deuxième composant, chacun des premier et deuxième composants comprenant une vanne d'entrée d'eau ; et
la détermination que le premier composant est dans l'état d'alimentation en eau, et la commande de l'alimentation en eau vers le deuxième composant sur la base d'une demande d'alimentation en eau du deuxième composant comprend :
(S22) la détermination que le premier composant est dans l'état d'alimentation en eau, et sur la base de la demande d'alimentation en eau du deuxième composant, la commande de la vanne d'entrée d'eau du premier composant pour l'ouvrir afin d'alimenter en eau le premier composant par un premier passage d'un agencement à trois voies, et la commande de la vanne d'entrée d'eau du deuxième composant pour l'ouvrir afin d'alimenter en eau le deuxième composant par un deuxième passage de l'agencement à trois voies.

3. Procédé de commande selon la revendication 2, dans lequel :
Ladite commande de la vanne d'entrée d'eau du premier composant pour l'ouvrir comprend :
la commande de l'ouverture de la vanne d'entrée d'eau du premier composant, et le réglage d'un degré d'ouverture de la vanne d'entrée d'eau du premier composant afin de commander un débit d'eau alimentant le premier composant ; et
ladite commande de la vanne d'entrée d'eau du deuxième composant pour l'ouvrir comprend :
la commande de la vanne d'entrée d'eau du deuxième composant pour l'ouvrir, et l'ajustement d'un degré d'ouverture de la vanne d'entrée d'eau du deuxième composant pour commander un débit d'eau alimenté vers le deuxième composant.

4. Procédé de commande selon la revendication 1, dans lequel ladite commande du réservoir d'eau de la station de base du composant de nettoyage de sol (20) pour alimenter en eau le réservoir d'eau de la partie mobile ; et/ou ladite commande du réservoir d'eau de la station de base du composant de nettoyage de sol (20) pour alimenter en eau le réservoir de lavage de la station de base comprennent en outre :
(S23) la commande de l'eau alimentée vers le réservoir d'eau de la station de base du composant de nettoyage de sol (20) pour atteindre un premier seuil.

5. Procédé de commande selon la revendication 1, dans lequel :
le composant de nettoyage de sol (20) comprend en outre une pompe d'aspiration d'eau de la partie mobile ; et
ladite commande du réservoir d'eau de la station de base du composant de nettoyage de sol (20) pour alimenter en eau le réservoir d'eau de la partie mobile comprend :
le commande de la pompe d'aspiration d'eau de la partie mobile pour l'ouvrir, et (S29) l'alimentation en eau du réservoir d'eau de la partie mobile par la pompe d'aspiration d'eau de la partie mobile.

6. Procédé de commande selon la revendication 1, dans lequel :
le composant de nettoyage de sol (20) comprend en outre une pompe à eau de station de base ; et
ladite commande du réservoir d'eau de la station de base du composant de nettoyage de sol (20) pour alimenter en eau le réservoir de lavage de la station de base comprend :
la commande de l'ouverture de la pompe à eau de la station de base, et (S28) l'alimentation en eau du réservoir de lavage de la station de base à l'aide de la pompe à eau de la station de base.

7. Procédé de commande selon la revendication 4, comprenant en outre, à la suite de ladite étape (S23) de commande de l'alimentation en eau du réservoir d'eau de la station de base du composant de nettoyage de sol (20) pour atteindre le premier seuil :
l'arrêt de l'alimentation en eau du composant de nettoyage de sol (20) ;
(S25) l'obtention d'un volume d'eau actuel du réservoir d'eau de la station de base du composant de nettoyage de sol (20) ; et
(S27) l'alimentation en eau du réservoir d'eau de la station de base en réponse à (S26) la détermination que le volume d'eau actuel est inférieur à un deuxième seuil,
le deuxième seuil étant inférieur ou égal au premier seuil.

8. Appareil de commande (100) d'un ensemble de nettoyage (200), l'appareil de commande (100) comprenant :
un module d'obtention (101) configuré pour obtenir une demande d'alimentation en eau d'au moins un composant de l'ensemble de nettoyage (200), **caractérisé en ce que**
l'ensemble de nettoyage (200) comprend deux composants, à savoir un composant de nettoyage de sol (20) et un composant de nettoyage de vêtements (10) ; et l'appareil de commande comprenant en outre :
un module de commande (102) configuré pour déterminer que l'un des deux composants de l'ensemble de nettoyage (200) est dans un état d'alimentation en eau, et pour commander l'alimentation en eau vers un autre des deux composants de l'ensemble de nettoyage (200) sur la base d'une demande d'alimentation en eau de l'autre des deux composants, dans lequel :
le composant de nettoyage de sol (20) comprend un réservoir d'eau de station de base, un réservoir d'eau de partie mobile et un réservoir de lavage de station de base ; et
le module de commande (102) est en outre configuré pour :
déterminer que le composant de nettoyage des vêtements (10) est dans l'état d'alimentation en eau ; et
en fonction d'une demande d'alimentation en eau du composant de nettoyage de sol (20), commander le réservoir d'eau de la station de base du composant de nettoyage de sol (20) pour alimenter en eau le réservoir d'eau de la partie mobile, et/ou commander le réservoir d'eau de la station de base du composant de nettoyage de sol (20) pour alimenter en eau le réservoir de lavage de la station de base.

9. Ensemble de nettoyage (200), comprenant :
une mémoire (202),
un processeur (201) ; et
un programme informatique stocké dans la mémoire (202) et exécutable sur le processeur (201),
**caractérisé en ce que** le processeur (201) est configuré pour mettre en œuvre, lors de l'exécution du programme informatique, un procédé de commande selon l'une quelconque des revendications 1 à 7.

10. Support de stockage lisible par ordinateur, comportant une instruction lisible par ordinateur stockée sur celui-ci,
**caractérisé en ce que** l'instruction lisible par ordinateur met en œuvre, lorsqu'elle est exécutée par un processeur (201), un procédé de commande selon l'une quelconque des revendications 1 à 7.
